# EUROPEAN PATENT SPECIFICATION

(11) **EP 2 250 793 B1**
(45) Date of publication and mention of the grant of the patent: **20.07.2022**
(21) Application number: 08872411.7
(22) Date of filing: 16.12.2008
(51) Int. Cl.: H04L 67/55, H04L 9/40, H04L 67/54

(54) **SYSTEM AND METHOD FOR IMPLEMENTING A PUBLICATION**
SYSTEM UND VERFAHREN ZUM IMPLEMENTIEREN EINER PUBLIKATION
SYSTÈME ET PROCÉDÉ POUR METTRE EN OEUVRE UNE PUBLICATION

(30) Priority: 14.02.2008 US 28884 P
(43) Date of publication of application: 17.11.2010
(73) Proprietor: Nokia Technologies Oy, 02610 Espoo (FI)
(72) Inventor: KISS, Krisztian, San Francisco CA 94121 (US)
(74) Representative: Swindell & Pearson Limited
(86) International application number: PCT/FI2008/000143
(87) International publication number: WO 2009/101235

(56) References cited:
- EP-A1- 1 873 976
- US-A1- 2007 214 243
- TELEFONICA: "PRS2 Publication Authorization, OMA-PAG-2008-0045-INP_PRS2_PUBLISH_AUTHORI ZATION___DELEG", OPEN MOBILE ALLIANCE (OMA), 4330 LA JOLLA VILLAGE DR., SUITE 110 SAN DIEGO, CA 92122 ; USA , 28 January 2008 (2008-01-28), pages 1-4, XP064154760, Retrieved from the Internet: URL:ftp/Public_documents/COM/COM-XDM/2008/ [retrieved on 2008-01-29]
- 'Open Mobile Alliance: ''Presence SIMPLE Specification''' OMA-TS-PRESENCE_SIMPLE-V1_0-20060725-A, [Online] 25 July 2006, XP008140681 Retrieved from the Internet: <URL:http://www.openmobilealliance.org/tech nical/release_program> [retrieved on 2009-03-17]

## Description

### FIELD OF THE INVENTION

The present invention relates generally to presence services. More particularly, the present invention relates to publication authorization policies and/or rules that provide publication delegation and restrictions on allowed presence information.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

The Open Mobile Alliance (OMA) is a standards body which collectively develops open standards for use in the mobile industry. The OMA helps to create interoperable services enablers to work across countries, operators and mobile terminals and is driven by market requirements. To expand the mobile market, companies supporting the Open Mobile Alliance work to aid in the rapid and wide development and deployment of a variety of new, enhanced mobile information, communication and entertainment services.

The OMA is currently developing Presence and XML Document Management (XDM) services based on Session Initiation Protocol (SIP), and Extensible Markup Language (XML) Configuration Access Protocol (XCAP) protocols developed by the International Engineering Task Force (IETF) SIP for Instant Messaging and Presence Leveraging Extensions (SIMPLE) working group.

A presence service may refer to a network service or system which accepts, stores and distributes presence information, where the presence information can be subject to various controls. Additionally, requirements have been specified for the collection and distribution of presence information, for example, methods of publishing, subscribing, notifying, etc., as well as for the types of content that may be contained in the presence information, such as willingness to communicate, device status, etc. Presence information refers to, for example, a dynamic set of information pertaining to a particular presentity. This information may comprise, for example, a status indicator that indicates the ability and willingness of a communication partner to communicate. Moreover, a presence service may be linked with many other services or enablers.

As described above, requirements have been specified for presence services, where at least some of these requirements are listed in the OMA SIMPLE Presence 2.0 Requirements Document. In the OMA SIMPLE Presence 2.0 Requirements Document, an enabler has been defined which is to have the following requirements:

| | | |
|---|---|---|
| FEAT-PUB-002 | The Presence Service SHOULD support the publication of Presence Information on behalf of other Presentities (refer to Delegation Section). | PRESENCE 2.0 |

| | | |
|---|---|---|
| FEAT-DEL-001 | The Presence Service SHALL allow a Presentity to selectively authorize others to perform publication on behalf of the Presentity. | PRESENCE 2.0 |

A conventional presence service currently includes an authorization policy dealing with subscriptions referred to as presence authorization rules. These presence authorization rules describe any authorized watchers that are allowed to subscribe to (or blocked from subscribing to) a particular presentity's presence information.

Presence publication delegation has been identified as being an important feature of OMA SIMPLE Presence 2.0 to allow users and/or applications to perform presence information publication on behalf of other users. For example, a secretary may publish presence information on behalf of his/her boss or a calendar application resident on a user's computer may publish the user's presence information on behalf of the user.

Details regarding the presence authorization rules for subscriptions are described in the OMA SIMPLE Presence Technical Specification (TS) 2.0 and the OMA SIMPLE Presence Extensible Markup Language Document Management (XDM) TS 2.0. As described in the OMA SIMPLE Presence TS 2.0 document, the presence authorization rules include subscription authorization rules and presence content rules. Subscription authorization rules determine how incoming subscriptions are handled, while presence content rules determine what or which presence information is disseminated to watchers that have been accepted under any applicable subscription authorization rules.

Further background information is contained within the OMA's Presence Simple Specification (OMA-TS-Presence_Simple-v1_0-20060725-A) and in Telefonica document "PRS2 Publication Authorization,OMA-PAG-2008-0045-INP_PRS2_Publish_Authorization__Deleg (28 January 2008). However, these documents do not disclose how content rules may be provided to a publisher if it is determined that a publication request should be blocked.

EP1873976 discloses a method and system of issuing presence information.

In particular, it discloses how a presence system may handle delegation. It does not discuss how content rules may be provided to a publisher, if it is determined that a publication request should be blocked.

### SUMMARY OF THE INVENTION

The scope of the invention is defined by the appended claims. Various embodiments create and enforce publication authorization rules in a presence service so that a publication of presence information associated with a presentity may be delegated to a publisher on behalf of the presentity. Various embodiments also provide a system and method of defining how a publisher learns about content rules within a policy in a single transaction, thus avoiding unnecessary and/or extra transactions when the (partial) policy is learned via SIP signaling used for the actual publication. Additionally, a service provider can be provided with the ability to restrict presence information that a presentity is allowed to publish. Hence, publication delegation may be effectuated in cases when a rule matches users (with identities) other than the presentity whose presence information is to be published.

Moreover, service provider restriction on the allowed presence information may also be effectuated in those cases when a rule matches the identity of the presentity.

Various embodiments of the present invention are applicable for virtually any Presence solution, including Internet Messaging and Presence Services (IMPS) (defined by the OMA), SIMPLE Presence, and the Extensible Messaging and Presence Protocol (XMPP) (defined by the Internet Engineering Task Force (IETF)).

These and other advantages and features of various embodiments of the present invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

Embodiments of the invention are described by referring to the attached drawings, in which:
Figure 1 illustrates an exemplary presence service architecture in accordance with various embodiments;
Figure 2 illustrates a flow chart describing operations performed in accordance with various embodiments for publication delegation;
Figure 3 is an overview diagram of a system within which various embodiments of the present invention may be implemented;
Figure 4 is a perspective view of an electronic device that can be used in conjunction with the implementation of various embodiments of the present invention; and
Figure 5 is a schematic representation of the circuitry which may be included in the electronic device of Figure 4.

### DETAILED DESCRIPTION OF THE PREFERRED EMBODIMENTS

Various embodiments provide systems and methods that allow for publication delegation through the use of publication authorization rules, where a presentity may allow another entity, e.g., a publisher, to publish presence information associated with the presentity on behalf of the presentity. Additionally, various embodiments provide the ability for a service provider to restrict presence information that a presentity is allowed to publish as the publication authorization rules may also include a rule for the presentity itself. Hence, publication delegation may be effectuated in cases when a rule matches users (with identities) other than the presentity whose presence information is to be published. Moreover, service provider restriction on the allowed presence information may also be effectuated in those cases when a rule matches the identity of the presentity.

With regard to the aforementioned publication authorization rules, the rules in such a publication authorization policy determine how incoming publications are handled (e.g., allowing or blocking), as well the actual presence information itself that users and/or applications are allowed to publish. The Internet Engineering Task Force (IETF) Request For Comments (RFC) 3903, available at http://www.ietf.org/rfc/rfc3903.txt, describes a PUBLISH method for presence services. IETF RFC 5025, available at http://www.ietf.org/rfc/rfc5025.txt, describes a framework for handling subscriptions and related decisions that a presence server may make. However, there is no description of how to indicate if some (or all) presence information elements within the published presence information cannot be accepted by a presence server for some reason (for example., due to a publication authorization rule's content policy). Hence, even if the publication authorization content rules are defined, there is no known protocol or method for how a presence server might indicate to a presence source what allowed content of the presence source is publishable. Moreover, there is no description of how to address publication authorization for publication delegation.

One contemplated method for addressing the above issue is to indicate a content policy to a presence source within the body of a PUBLISH response. For example, a 200 (OK) response may refer to accepting all of the publication content while a 202 (Accepted) response including a message body may indicate that only a part of the presence information that is authorized. However, IETF RFC 3903 explicitly indicates that a body in a PUBLISH response has no meaning, and so implementing the contemplated method for indicating a content policy would violate IETF RFC 3903 or require an update to IETF RFC 3903. Additionally, a presence source would only become aware of some partial policy relevant to the presence information it is currently publishing, thus resulting in unnecessary transaction exchanges for a presence source to discover the remaining part of the content policy.

Moreover, the unnecessary transaction exchanges would also potentially result in the repetition of the same policy rules being transmitted via the publication responses. Hence, a presence source could never fully learn the relevant content policy but instead would repeatedly attempt publication and if successful, assemble the policy rules in the policy on its own based on a presence server reply. Again, such a process can result in unnecessary traffic and logic in the presence source to construct a policy document.

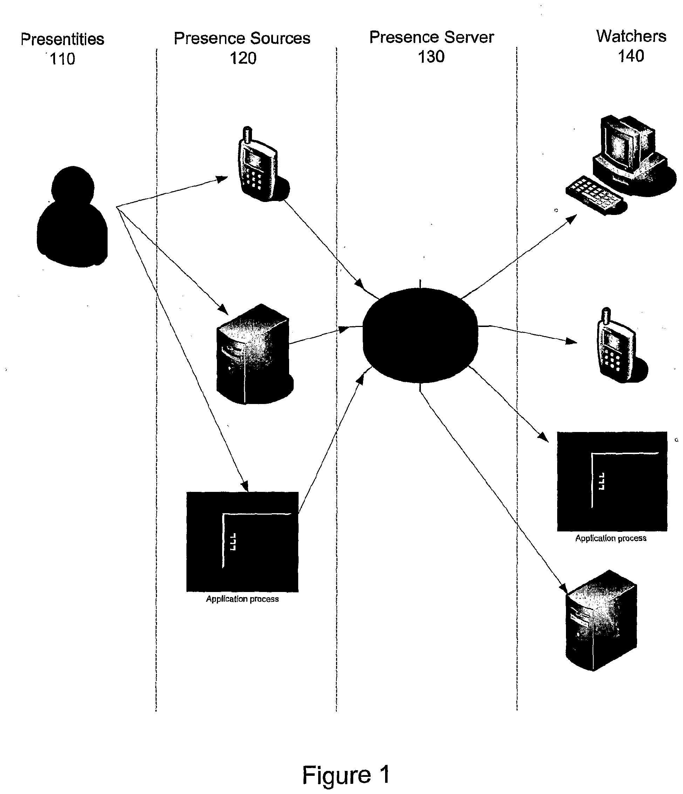

Figure 1 illustrates an exemplary presence service architecture 100. Presentities 110 include logical entities that have presence information associated therewith, for example, people, a particular service, etc. The presence information associated with the presentities 110 may come from or be composed by one or more presence sources 120. In other words, presence sources 120 "publish" the presence information. The presence sources 120 may comprise, for example, presence user agents, network elements acting as presence agents, applications, such as corporate calendars, etc., or alternatively may be located in a mobile terminal.

A presence server 130 is another logical entity of the network 100 that receives the presence information from the presence sources 120, while, for example, transforming received instances of presence information into a useable format. That is, the presence server 130 handles publications from one or more presence sources associated with a presentity. Publications may comprise refreshing presence information, replacing presence information, or removing presence information. Handling the publications may refer to forwarding the presence information, once transformed, to watchers 140. Watchers 140 may refer to any uniquely identifiable entity in the network 100 that requests presence information about any one or more presentities 110 from the presence service. Watchers 140 may request presence information via a "subscription," which may refer to the information maintained by the presence service about a subscriber's request to be notified of changes in the presence information of one or more presentities 110. It should be noted that a subscriber may refer to a watcher 140 that has requested the presence service to notify it of changes in presence information of the one or more presentities 110.

For consistency and simplicity, it would be advantageous for any publication authorization rules related to publication delegation to have a similar or equivalent format as the presence authorization rules for subscriptions.

A framework for creating authorization policies for access to application-specific data is defined in IETF RFC 4745, available at http://www.ietf.org/rfc/rfc4745.txt. Therefore, various embodiments may implement presence publication delegation and presence information restriction via the use of publication authorization rules that are formatted in a manner commensurate with common-policy structure described in IETF RFC 4745 and extended in the OMA SIMPLE Presence XDM TS 2.0.

Each of the publication authorization rules in accordance with various embodiments contains a sequence of <rule> elements, where each rule comprises at least three parts: a "conditions" element, an "actions" element and a "transformations" element. The condition element may specify those conditions under which a rule is to be applied to presence server processing. The actions element may instruct the presence server as to what actions it should undertake. The transformations element indicates the operations the presence server executes, , for example, the authorized presence information the presence source is allowed to publish.

Various embodiments provide a <pub-handling> element specifying the publication authorization decision that a presence server makes associated with the <actions> child element of any <rule> element. It should be noted that in accordance with various embodiments, the values "block" and "allow" are meaningful in the publication authorization rules. For the value "allow", a presence server accepts the proposed publication and returns a 200 (OK) response. For the value "block", the presence server rejects the proposed publication and returns a 403 (Forbidden) response.

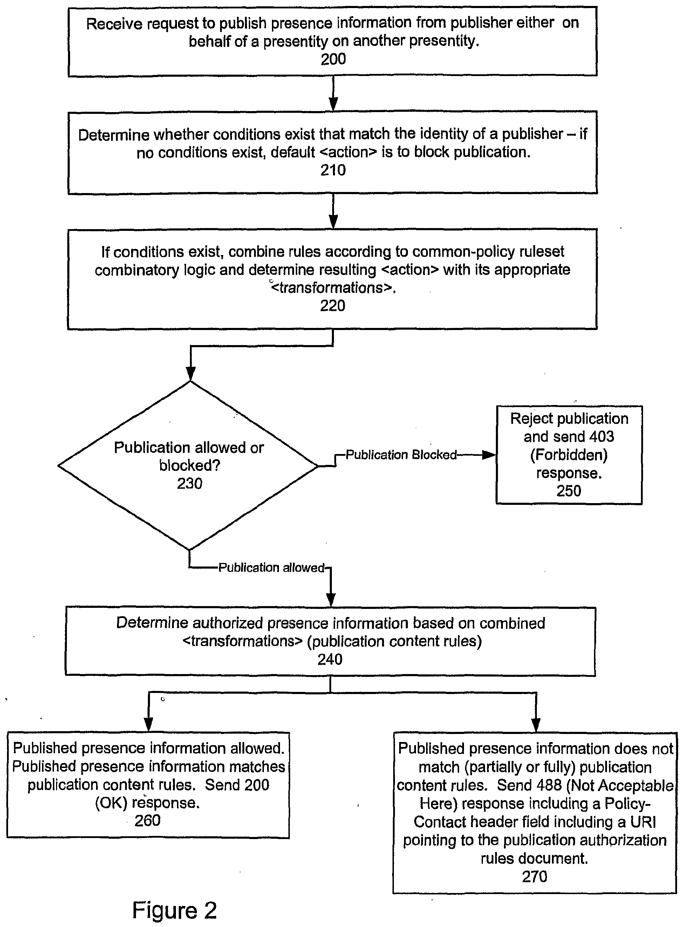

Figure 2 is a flow chart illustrating exemplary processes that are performed in order to allow presence information to be published on behalf of a presentity by another publisher. Additionally, these exemplary processes can be used, for example, to handle scenarios where a service provider wishes to apply certain restrictions on the allowed presence information. At 200, a request for publication of presence information of a presentity is received (for example, at a presence server) from a publisher, where the publication is either on behalf of the presentity or on behalf of another presentity. At 210, the presence server determines based upon a <condition> element of an applicable publication authorization rule, whether or not the appropriate conditions exist that require the application of the publication authorization rule. For example, it may be determined whether conditions exist that match the identity of a publisher, so that the presence server applies those publication authorization rules. However, if, for example, no conditions matching an identity of the publisher exist, the default action can be to block the publication. Moreover, it should be noted that a publication authorization rule may be applied to the presentity itself referred to as presence information restriction. Alternatively, the publication authorization rule may be applied to another presentity as described above, referred to a delegation. At 220, the presence server determines what actions should be taken based on the conditions, as per an <actions> element of the publication authorization rule, where if conditions exist, rules are combined according to common-policy ruleset combinatory logic and determine a resulting action with transformations. For example, the applicable <actions> element instructs the presence server to decide that the publication should be one of allowed and blocked at 230. If the decision arrived at is to allow publication, at 240, the presence server determines the authorized presence information based on combined transformations (publication content rules). That is, the <transformations> element instructs the presence server to filter the published presence information and allow only the presence elements explicitly specified by the child elements of the <transformations> element.. If, however, the decision made is to block publication, at 250, the publication request is rejected outright and a 403 (Forbidden) response is sent. At 260, when the published presence information is allowed and the published presence information matches the publication content rules, a 200 (OK) response is sent. Alternatively at 270, if the published presence information does not match (partially or fully) the publication content rules, a 488 (Not Acceptable Here) response including a Policy-Contact header field is sent, where the Policy-Contact header field includes a URI pointing to the publication authorization rules document.

Also in accordance with various embodiments, the <transformations> element of the publication authorization rules describe content rules. For example, a first group of transformations may allow for the publication of person, device, and service data elements based on some identifying information for those elements. Another group of transformations may allow for the publication of particular data elements in a presence document. For example and in accordance with various embodiments, an <allow-note> element is provided to control the publication of the <note> element by a particular publisher.

Various embodiments also provide systems and methods that allow a presence source to learn the relevant content rules associated with the identity of a presentity on whose behalf a presence source is publishing presence information. That is, the combined <transformations> element from matching publication authorization rules (for example, rules with an <identity> element matching the identity of the publisher) is utilized, thus allowing for the re-use of the behavior and SIP extensions presented in the draft-ietf-sip-session-policy-framework-02 memorandum entitled "A Framework for Session Initiation Protocol (SIP) Session Policies."

If a publisher is publishing a presence element not authorized by the presentity, the presence server will reject the publication with a 488 (Not Acceptable Here) response that contains a Policy-Contact header field. The Policy-Contact header field is utilized to point to a Uniform Resource Identifier (URI) of, for example, a document containing the publication authorization rules created in accordance with various embodiments. It should be noted that the document can be stored in a presence XDMS.

After receiving the 488 (Not Acceptable Here) response with a Policy-Contact header field, the presence source fetches the publication authorization rules from the presence XDMS and discovers the applicable content rules for publication. The presence XDMS will then match the identity of the fetching presence source with the identities present in the conditions element of the rules and only return the combined <transformations> element from the matching rules. Hence, the possibility for a publisher to learn an entire policy is avoided since the publisher is only allowed to discern the policy relevant to the identity of that particular publisher. After receiving the relevant part of the content rules from the presence XDMS, the presence source may create a well-formed presence document for publication which is authorized by the publication authorization rules that have been discovered. Moreover, as with any other XDM document, the presence source may subscribe for changes in the policy document as described in the XDM Core 2.0 specification. Alternatively, the presence source may fetch the latest (for example, changed) document if a publication attempt fails but the local (fore example, cached) copy of the policy document would allow the presence document to be published.

Various embodiments may be used to create and enforce publication authorization rules in a presence service. Additionally, various embodiments provide a system and method of defining how a publisher learns about content rules within a policy in a single transaction, thus avoiding unnecessary and/or extra transactions when (partial) policy is discovered via SIP signaling used for the actual publication.. That is, in accordance with various embodiments, policy downloading can be separated from SIP signaling. For example, a publication authorization rules document can be obtained from a presence XDMS, instead of piggybacking policy information onto SIP signaling messages, where a piece of policy information is included in every unsuccessful PUBLISH transaction response relevant to a rejected publication.

Many of the above sample implementations of various embodiments are described in a SIMPLE presence environment. However, one skilled in the art would understand that various embodiments of the present invention are applicable to other presence solutions as well.

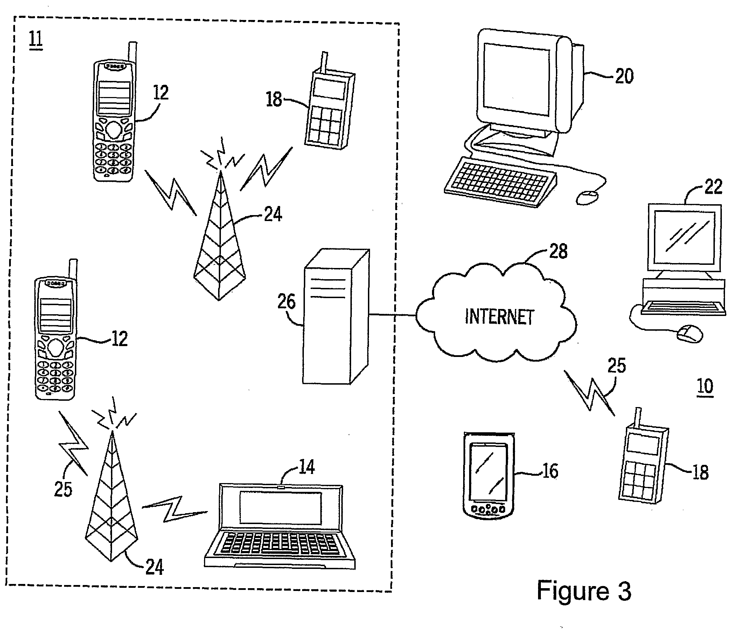

Figure 3 shows a system 10 in which various embodiments of the present invention may be utilized, comprising multiple communication devices that may communicate through one or more networks. The system 10 may comprise any combination of wired or wireless networks including, but not limited to, a mobile telephone network, a wireless Local Area Network (LAN), a Bluetooth personal area network, an Ethernet LAN, a token ring LAN, a wide area network, the Internet, etc. The system 10 may include both wired and wireless communication devices.

For exemplification, the system 10 shown in Figure 3 includes a mobile telephone network 11 and the Internet 28. Connectivity to the Internet 28 may include, but is not limited to, long range wireless connections, short range wireless connections, and various wired connections including, but not limited to, telephone lines, cable lines, power lines, and the like.

The exemplary communication devices of the system 10 may include, but are not limited to, an electronic device 12 in the form of a mobile telephone, a combination personal digital assistant (PDA) 0 and mobile telephone 14, a PDA 16, an integrated messaging device (IMD) 18, a desktop computer 20, a notebook computer 22, etc. The communication devices may be stationary or mobile as when carried by an individual who is moving. The communication devices may also be located in a mode of transportation including, but not limited to, an automobile, a truck, a taxi, a bus, a train, a boat, an airplane, a bicycle, a motorcycle, etc. Some or all of the communication devices may send and receive calls and messages and communicate with service providers through a wireless connection 25 to a base station 24. The base station 24 may be connected to a network server 26 that allows communication between the mobile telephone network 11 and the Internet 28. The system 10 may include additional communication devices and communication devices of different types.

The communication devices may communicate using various transmission technologies including, but not limited to, Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc. A communication device involved in implementing various embodiments of the present invention may communicate using various media including, but not limited to, radio, infrared, laser, cable connection, and the like.

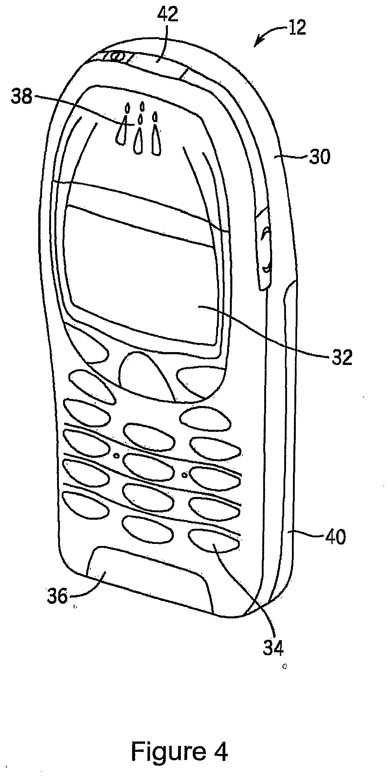

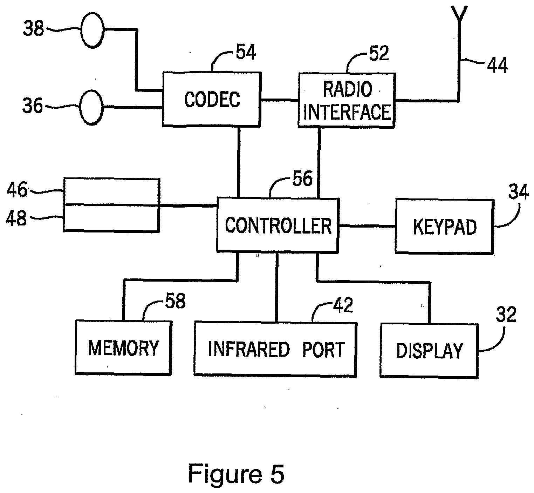

Figures 4 and 5 show one representative electronic device 12 within which the present invention may be implemented. It should be understood, however, that the present invention is not intended to be limited to one particular type of device. The electronic device 12 of Figures 4 and 5 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment, a card reader 48, radio interface circuitry 52, codec circuitry 54, a controller 56 and a memory 58. Individual circuits and elements are all of a type well known in the art, for example in the Nokia range of mobile telephones.

Various embodiments described herein are described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Various embodiments may be implemented in software, hardware, application logic or a combination of software, hardware and application logic. The software, application logic and/or hardware may reside, for example, on a chipset, a mobile device, a desktop, a laptop or a server. Software and web implementations of various embodiments may be accomplished with standard programming techniques with rule-based logic and other logic to accomplish various database searching steps or processes, correlation steps or processes, comparison steps or processes and decision steps or processes. Various embodiments may also be fully or partially implemented within network elements or modules. It should be noted that the words "component" and "module," as used herein and in the following claims, is intended to encompass implementations using one or more lines of software code, and/or hardware implementations, and/or equipment for receiving manual inputs.

The foregoing description of embodiments has been presented for purposes of illustration and description. The foregoing description is not intended to be exhaustive or to limit embodiments of the present invention to the precise form disclosed, and modifications and variations are possible in light of the above teachings within the scope of the invention as defined by the appended claims.

## Claims

1. A method for publication delegation, comprising:
Receiving (200) a request from a publisher entity to publish presence information of a presentity on behalf of the presentity or another presentity;
determining whether conditions exist that require application of a publication authorization rule;
if the conditions exist, determining (230) whether to allow or block the request to publish based on the application of the publication authorization rule; and
upon a determination to allow the request to publish, transforming (240) the presence information in accordance with publication content rules; and
upon determining (270) that the presence information does not match the content rules, rejecting the publication and providing to the publisher entity the content rules associated with an identity of the presentity on whose behalf a presence source is publishing the presence information of the presentity.

2. The method of claim 1, wherein the request is sent from a publisher entity different from the presentity.

3. The method of claim 1 or 2, wherein the conditions are defined in a conditions element of the publication authorization rule.

4. The method of claim 1, 2 or 3, wherein the determining of whether to allow or block the request to publish is further based upon decisions based on an action element of the publication authorization rule.

5. The method of any preceding claim, wherein the transformation of the presence information of the presentity is defined in a transformation element of the publication authorization rule.

6. The method of claim 5, wherein the transformation element describes the publication content rules for controlling which data elements of a presence document are allowed for publication, and wherein the presence document is representative of the presence information.

7. The method of any preceding claim, wherein the request to publish the presence information of the presentity is received by a presence server (130).

8. The method of any preceding claim, wherein the blocking of the request to publish further comprises responding to the request to publish with a response containing a policy contact header field.

9. The method of claim 8, wherein the policy contact header field points to a uniform resource identifier of a document containing the publication authorization rule.

10. A computer program comprising instructions for performing at least the following:
processing receipt of a request from a publisher entity to publish presence information of a presentity on behalf of the presentity or another presentity resulting in publication delegation;
determining whether conditions exist that require application of a publication authorization rule;
if the conditions exist, determining whether to allow or block the request to publish based on the application of the publication authorization rule;
upon a determination to allow the request to publish, transforming the presence information in accordance with publication content rules; and
upon a determination that the presence information does not match the content rules, rejecting the publication and providing the publisher entity with the content rules associated with the identity of the presentity.

11. A computer program as claimed in claim 10, further comprising instructions for performing the steps of any of claims 2 - 9.

12. A system (10) for publication delegation, comprising:
means for receiving a request from a publisher entity to publish presence information of a presentity on behalf of the presentity or another presentity;
means for determining whether conditions exist that require application of a publication authorization rule;
means for, if the conditions exist, determining whether to allow or block the request to publish based on the application of the publication authorization rule;
means for, upon a determination to allow the request to publish, transforming the presence information in accordance with publication content rules; and
means for, upon a determination that the presence information does not match the content rules, rejecting the publication and providing to the publisher entity the content rules associated with the identity of the presentity

13. A system (10) as claimed in claim 12, configured to operate as a presence server (130).

14. A system (10) as claimed in claim 12 or 13, wherein the publication authorization rule comprises a conditions element that defines the conditions, an actions element for determining whether to allow or block the request to publish and a transformations element for defining transformation of the presence information.

## Patentansprüche

1. Verfahren zur Veröffentlichungsdelegation, das Folgendes umfasst:
Empfangen (200) einer Anforderung zum Veröffentlichen von Präsenzinformationen einer Präsenzentität im Namen der Präsenzentität oder einer anderen Präsenzentität von einer Veröffentlicherentität;
Bestimmen, ob Bedingungen existieren, die die Anwendung einer Veröffentlichungsautorisierungsregel erfordern;
wenn die Bedingungen existieren, Bestimmen (230), ob die Anforderung zum Veröffentlichen auf Basis der Anwendung der Veröffentlichungsautorisierungsregel zugelassen oder blockiert werden soll; und
nach einer Bestimmung, die Anforderung zum Veröffentlichen zuzulassen, Umwandeln (240) der Präsenzinformationen gemäß Veröffentlichungsinhaltsregeln; und
nach Bestimmen (270), dass die Präsenzinformationen nicht mit den Inhaltsregeln übereinstimmen, Zurückweisen der Veröffentlichung und Bereitstellen der Inhaltsregeln, die mit einer Identität der Präsenzentität verknüpft sind, in deren Namen eine Präsenzquelle die Präsenzinformationen der Präsenzentität veröffentlicht, für die Veröffentlicherentität.

2. Verfahren nach Anspruch 1, wobei die Anforderung von einer Veröffentlicherentität gesendet wird, die sich von der Präsenzentität unterscheidet.

3. Verfahren nach Anspruch 1 oder 2, wobei die Bedingungen in einem Bedingungselement der Veröffentlichungsautorisierungsregel definiert sind.

4. Verfahren nach Anspruch 1, 2 oder 3, wobei das Bestimmen, ob die Anforderung zum Veröffentlichen zugelassen oder blockiert werden soll, ferner auf Entscheidungen basiert, die auf einem Aktionselement der Veröffentlichungsautorisierungsregel basieren.

5. Verfahren nach einem der vorhergehenden Ansprüche, wobei die Umwandlung der Präsenzinformationen der Präsenzentität in einem Umwandlungselement der Veröffentlichungsautorisierungsregel definiert ist.

6. Verfahren nach Anspruch 5, wobei das Umwandlungselement die Veröffentlichungsinhaltsregeln zum Steuern, welche Datenelemente eines Präsenzdokuments zur Veröffentlichung zuzulassen sind, beschreibt und wobei das Präsenzdokument die Präsenzinformationen repräsentiert.

7. Verfahren nach einem der vorhergehenden Ansprüche, wobei die Anforderung zum Veröffentlichen der Präsenzinformationen der Präsenzentität von einem Präsenzserver (130) empfangen wird.

8. Verfahren nach einem der vorhergehenden Ansprüche, wobei das Blockieren der Anforderung zum Veröffentlichen ferner das Antworten auf die Anforderung zum Veröffentlichen mit einer Antwort umfasst, die ein Richtlinienkontaktheaderfeld enthält.

9. Verfahren nach Anspruch 8, wobei das Richtlinienkontaktheaderfeld auf eine einheitliche Ressourcenkennung eines Dokuments zeigt, das die Veröffentlichungsautorisierungsregel enthält.

10. Computerprogramm, das Anweisungen zum Durchführen von mindestens Folgendem umfasst:
Verarbeiten des Empfangs einer Anforderung zum Veröffentlichen von Präsenzinformationen einer Präsenzentität im Namen der Präsenzentität oder einer anderen Präsenzentität von einer Veröffentlicherentität, was in einer Veröffentlichungsdelegation resultiert;
Bestimmen, ob Bedingungen existieren, die die Anwendung einer Veröffentlichungsautorisierungsregel erfordern;
wenn die Bedingungen existieren, Bestimmen, ob die Anforderung zum Veröffentlichen auf Basis der Anwendung der Veröffentlichungsautorisierungsregel zugelassen oder blockiert werden soll;
nach einer Bestimmung, die Anforderung zum Veröffentlichen zuzulassen, Umwandeln der Präsenzinformationen gemäß Veröffentlichungsinhaltsregeln; und
nach einer Bestimmung, dass die Präsenzinformationen nicht mit den Inhaltsregeln übereinstimmen, Zurückweisen der Veröffentlichung und Bereitstellen der Inhaltsregeln, die mit der Identität der Präsenzentität verknüpft sind, für die Veröffentlicherentität.

11. Computerprogramm wie in Anspruch 10 beansprucht, das ferner Anweisungen zum Durchführen der Schritte nach einem der Ansprüche 2-9 umfasst.

12. System (10) für eine Veröffentlichungsdelegation, das Folgendes umfasst:
Mittel zum Empfangen einer Anforderung zum Veröffentlichen von Präsenzinformationen einer Präsenzentität im Namen der Präsenzentität oder einer anderen Präsenzentität von einer Veröffentlicherentität;
Mittel zum Bestimmen, ob Bedingungen existieren, die die Anwendung einer Veröffentlichungsautorisierungsregel erfordern;
Mittel zum Bestimmen, ob die Anforderung zum Veröffentlichen auf Basis der Anwendung der Veröffentlichungsautorisierungsregel zugelassen oder blockiert werden soll, wenn die Bedingungen existieren;
Mittel zum Umwandeln der Präsenzinformationen gemäß Veröffentlichungsinhaltsregeln nach einer Bestimmung, die Anforderung zum Veröffentlichen zuzulassen; und
Mittel zum Zurückweisen der Veröffentlichung und Bereitstellen der Inhaltsregeln, die mit der Identität der Präsenzentität verknüpft sind, für die Veröffentlicherentität nach einer Bestimmung, dass die Präsenzinformationen nicht mit den Inhaltsregeln übereinstimmen.

13. System (10) wie in Anspruch 12 beansprucht, das dazu ausgelegt ist, als ein Präsenzserver (130) betrieben zu werden.

14. System (10) wie in Anspruch 12 oder 13 beansprucht, wobei die Veröffentlichungsautorisierungsregel ein Bedingungselement, das die Bedingungen definiert, ein Aktionselement zum Bestimmen, ob die Anforderung zum Veröffentlichen zugelassen oder blockiert werden soll, und ein Umwandlungselement zum Definieren einer Umwandlung der Präsenzinformationen umfasst.

## Revendications

1. Procédé pour une délégation de publication, comprenant les étapes consistant à :
recevoir (200) une demande provenant d'une entité d'édition pour publier des informations de présence d'une présentité (entité de présence) au nom de la présentité ou d'une autre présentité ;
déterminer s'il existe des conditions qui nécessitent l'application d'une règle d'autorisation de publication ;
si les conditions existent, déterminer (230) s'il faut autoriser ou bloquer la demande de publier sur la base de l'application de la règle d'autorisation de publication ; et
lors d'une détermination d'autoriser la demande de publier, transformer (240) les informations de présence conformément à des règles de contenu de publication ; et
lorsqu'il est déterminé (270) que les informations de présence ne concordent pas avec les règles de contenu, rejeter la publication et fournir à l'entité d'édition les règles de contenu associées à une identité de la présentité au nom de laquelle une source de présence publie les informations de présence de la présentité.

2. Procédé selon la revendication 1, dans lequel la demande est envoyée par une entité d'édition différente de la présentité.

3. Procédé selon la revendication 1 ou 2, dans lequel les conditions sont définies dans un élément de conditions de la règle d'autorisation de publication.

4. Procédé selon la revendication 1, 2 ou 3, dans lequel la détermination quant à s'il faut autoriser ou bloquer la demande de publier est en outre basée sur des décisions basées sur un élément d'action de la règle d'autorisation de publication.

5. Procédé selon l'une quelconque des revendications précédentes, dans lequel la transformation de l'information de présence de la présentité est définie dans un élément de transformation de la règle d'autorisation de publication.

6. Procédé selon la revendication 5, dans lequel l'élément de transformation décrit les règles de contenu de publication pour contrôler les éléments de données d'un document de présence qui sont autorisés à être publiés, et dans lequel le document de présence est représentatif des informations de présence.

7. Procédé selon l'une quelconque des revendications précédentes, dans lequel la demande de publier les informations de présence de la présentité est reçue par un serveur de présence (130).

8. Procédé selon l'une quelconque des revendications précédentes, dans lequel le blocage de la demande de publier comprend en outre la réponse à la demande de publier avec une réponse contenant un champ d'en-tête de contact de politique.

9. Procédé selon la revendication 8, dans lequel le champ d'en-tête de contact de politique pointe vers un identifiant de ressource uniforme d'un document contenant la règle d'autorisation de publication.

10. Programme informatique comprenant des instructions pour réaliser au moins ce qui suit :
traiter la réception d'une demande provenant d'une entité d'édition pour publier des informations de présence d'une présentité au nom de la présentité ou d'une autre présentité résultant en une délégation de publication ;
déterminer s'il existe des conditions qui nécessitent l'application d'une règle d'autorisation de publication ;
si les conditions existent, déterminer s'il faut autoriser ou bloquer la demande de publier sur la base de l'application de la règle d'autorisation de publication ;
lors d'une détermination d'autoriser la demande de publier, transformer les informations de présence conformément à des règles de contenu de publication ; et
lorsqu'il est déterminé que les informations de présence ne concordent pas avec les règles de contenu, rejeter la publication et fournir l'entité d'édition avec les règles de contenu associées à l'identité de la présentité.

11. Programme informatique selon la revendication 10, comprenant en outre des instructions pour réaliser les étapes de l'une quelconque des revendications 2 à 9.

12. Système (10) pour une délégation de publication, comprenant :
des moyens pour recevoir une demande provenant d'une entité d'édition pour publier des informations de présence d'une présentité au nom de la présentité ou d'une autre présentité ;
des moyens pour déterminer s'il existe des conditions qui nécessitent l'application d'une règle d'autorisation de publication ;
des moyens pour, si les conditions existent, déterminer s'il faut autoriser ou bloquer la demande de publier sur la base de l'application de la règle d'autorisation de publication ;
des moyens pour, lors d'une détermination d'autoriser la demande de publier, transformer les informations de présence conformément à des règles de contenu de publication ; et
des moyens pour, lorsqu'il est déterminé que les informations de présence ne concordent pas avec les règles de contenu, rejeter la publication et fournir à l'entité d'édition les règles de contenu associées à l'identité de la présentité.

13. Système (10) selon la revendication 12, configuré pour fonctionner comme un serveur de présence (130).

14. Système (10) selon la revendication 12 ou 13, dans lequel la règle d'autorisation de publication comprend un élément de conditions qui définit les conditions, un élément d'actions pour déterminer s'il faut autoriser ou bloquer la demande de publier et un élément transformations pour définir une transformation des informations de présence.
